# EUROPEAN PATENT SPECIFICATION

(11) **EP 3 324 280 B1**
(45) Date of publication and mention of the grant of the patent: **22.07.2020**
(21) Application number: 16382534.2
(22) Date of filing: 16.11.2016
(51) Int. Cl.: G06F 3/0488, B60K 37/04, G06F 3/0481

(54) **METHOD FOR CONFIGURING A GRAPHIC DISPLAY SYSTEM**
VERFAHREN ZUM KONFIGURIEREN EINES GRAPHISCHEN ANZEIGESYSTEMS
PROCÉDÉ POUR CONFIGURER UN SYSTÈME D'AFFICHAGE GRAPHIQUE

(43) Date of publication of application: 23.05.2018
(73) Proprietor: Seat, S.A., 08760 Martorell (ES)
(72) Inventor: DOÑATE GIMÉNEZ, ANNA, 08780 BARCELONA (ES); GARCIA PAMPLONA, JOSE ANTONIO, 08760 BARCELONA (ES); RODRÍGUEZ BOSCH, RUBÉN, 08760 BARCELONA (ES); TRIPPEN, KATJA, 08760 BARCELONA (ES); TALLADA CEBRIAN, ARNAU, 08760 BARCELONA (ES); BAÑOS SERRADILLA, VÍCTOR, 08760 BARCELONA (ES)
(74) Representative: Elzaburu S.L.P.

(56) References cited:
- EP-A1- 2 305 508
- EP-A1- 2 851 773
- EP-A1- 3 040 808
- US-A1- 2014 096 050

## Description

### SUBJECT OF THE INVENTION

The subject of the present patent application is a method for configuring a graphic display system according to Claim 1, which also incorporates notable innovations and advantages.

### BACKGROUND OF THE INVENTION

In the automotive sector, there is currently a trend for being able to personalize the information featured on the graphic display device - screen - of the HMI (Human Machine Interface) in order that the vehicle user is able more rapidly to view the required data whilst driving.

Specifically, as reflected in document EP2927791, the prior art discloses a method and an associated device for providing a graphical user interface in a vehicle, whereby the at least one first graphic object is in a first region in a first viewing zone. By means of an action on the part of the user, the first graphic object is linked to a second region, in said first viewing zone, associated with a second user device. After said action on the part of the user, it is shown on a second surface of the screen, in which the second viewing zone is assigned to the second user device.

It is observed in said document that the user has a series of information areas on the graphic display device - screen - of the vehicle. Said information areas may be modified and/or replaced, changing the content thereof. To that end, a submenu opens, in which the various new content options for the information areas selected by the user are presented, in order for them to be changed.

Said appearance of the submenu implies at least one adaptation of the information displayed on the screen: in a first embodiment, adapting and/or resetting the size of the information areas in order that the new, recently appeared submenu fits; in a second embodiment, overlaying the submenu with the remaining information areas, covering information and limiting the view. In both cases, the displayed information has to be reprocessed, which involves high levels of consumption in computing terms.

It can thus be seen that there is still a need for a method for configuring a graphic display system such that it enables the user to personalize the information areas on the graphic display device - screen - of the vehicle, rapidly, easily and without overloading the processor.
EP2851773 describes a widget setting method for presenting a widget setting interface on a display device based on first input, where the first input is used to select the widget setting interface, and the widget setting interface includes a widget setting region; and presenting a widget unit in a first setting sub-region based on second input, where the second input is used to select the widget unit and select the first setting sub-region that is used to present the widget unit and belongs to the widget setting region, and the widget unit is mapped to at least one application program. In the widget setting method and the terminal device provided in the embodiments of the present invention, a shape, content, and a mapped application program of a home screen widget can be user-defined, which meets a requirement of a user. US2014096050 discloses a method of launching a software program or application for using with a graphical user interface (GUI) display. One portion of the GUI display includes a taskbar while a second portion is divided into a plurality of windows. To launch one of the programs/applications represented by the icons within the taskbar, the user first selects the icon representing the icon to be launched. Once an icon is selected, a visual cue is displayed, where the visual cue includes a plurality of mini-windows representing the plurality of display windows. When the user drags the selected icon into one of the mini-windows and then releases the icon, the selected program/application is launched in the window that corresponds to the selected mini-window.
EP2305508 teaches a method for configuring and personalizing a vehicle user interface wherein the user interface utilizing a touch screen display mounted within the vehicle. User configurable aspects of the user interface include the number of zones within the touch screen display, the size of each zone, the subsystem interface assigned to each zone, the style and information contained within each subsystem interface, display brightness levels for the overall display or per zone, and the assignment and location of persistent soft buttons.

### DESCRIPTION OF THE INVENTION

The present invention provides a method according to claim 1. Further aspects of the invention are outlined in the dependent claims. The present invention consists in a method for configuring a graphic display system that enables the user to enhance his interaction with the graphic display device - screen - of the vehicle, in that he is able to personalize the information areas that appear thereon rapidly, easily and with optimized consumption levels on the part of the processor.

Currently, graphic display devices on a vehicle have a home screen that comprises a series of information areas that are fixed in terms of number and/or in terms of size, but with personalizable content. Furthermore, there is a fixed bar on the screen that contains an icon representing the various contexts of the HMI to which it is possible to gain access, said contexts potentially being, by way of example: 'navigation', 'settings', 'media', 'radio', and so on.

In essence, the following steps are followed with a view to changing the content of the information areas:
1. A corner and/or an edit icon for the information area to be changed is touched or clicked on.
2. Optionally, there is a visual indication step in which the user perceives that he is in "edit mode" (for example, by means of the fading of everything that is now not interactive, or a highlighting of interactive information, or a change in colours, or the like).
3. On the fixed bar, the icon representing the context with the information the user wishes to place in the editable information area is selected.
4. A touch or click is performed, such that the information contained in the information area prior to editing is replaced by the new information.

Thus, and more specifically, the invention consists in a method for configuring a graphic display system, wherein the graphic display system comprises at least one control unit, at least one first graphic display area, at least one second graphic display area, at least one information area, wherein the at least one second graphic display area comprises the at least one information area, at least one icon, wherein the at least one first graphic display area comprises the at least one icon, wherein the at least one icon comprises at least one first mode and at least one second mode, wherein the at least one information area provides a first information item associated with a first application, wherein the at least one icon is associated with a second application, wherein the at least one information area comprises at least one actuator, in which the at least one control unit carries out the following steps:
I. determining an actuation in the at least one actuator,
II. enabling the at least one first mode of the at least one icon,
III. determining an actuation in the at least one icon, and
IV. providing, in the at least one information area, a second information item associated with the second application.

In this way, the user is able to personalize the information to which he has access, both visually and by touch, optimizing the supply of data for the needs or interests of each driver and at every moment whilst driving. In addition, the information areas do not overlay one another such that access to information that may potentially be relevant in terms of driving is in no way hidden. It should be pointed out that any such overlaying could give rise to distractions from the task of driving. Furthermore, there is no readaptation of the scale or size of the information areas nor an appearance of new information where the user is able to select the required application, which simplifies the computing process for implementing the method of the present invention, resulting in more optimized consumption of processing time and of the resources of the vehicle control unit.

It should be clarified that first and second graphic display areas are understood to be zones of a graphic display device that are configured in order to display information. Information area (or widget, the customary English term) should be understood to mean a subarea of the graphic display device where, in a predefined space, it is possible to show specific information. First and second mode should be understood as different ways in which to display information associated with a specific application. Between a first or second mode there may be differences in the parameters that are shown that relate to the first application, differences in the graphic display, in the amount of information provided, etc. By way of example, a first mode associated with a first navigation application may be displaying only indicators of the next navigation instructions in order to arrive at a specific destination. On the other hand, a second mode associated with a first navigation application may be displaying a map marking out the route to be followed in order to arrive at a specific destination. The way in which the user switches between the first mode and the second mode of the information corresponding to one and the same icon is relevant, since said change has to be clear for the user, thereby economizing on icons, menus or submenus.

Advantageously, the at least one icon is always actuatable, i.e. it is always accessible and can be activated at any moment, such that the vehicle user is able to interact with it at any moment, either in the first mode or in the second mode.

According to the invention, the at least one second mode of the at least one icon comprises providing, in the at least one second graphic display area, the second application associated with the at least one icon. In this way, the vehicle user is able to change the available application to another in which he is interested, which is associated with the icon he selects.

It should be mentioned that the actuation on the at least one actuator comprises at least one touch. Very easily and intuitively, the user is able to activate the change of information on the graphic display device of the vehicle, with minimum distraction from driving. It is thus pointed out that the at least one icon comprises dual functionality. If the icon is touched, the at least one actuator having previously been touched, the content of the application selected in the at least one information area is enabled, for example the content of the 'time' application would be enabled in the at least one information area. On the other hand, if the icon is touched, the at least one actuator not having previously been touched, the content of the application selected in the at least one second graphic display area is enabled. The difference between the at least one information area and the at least one second graphic display area is noted, the former being a full screen that can enable the entire 'time' application content and the latter being a 'widget' display of the 'time' application, providing reduced and/or simplified access. Thus, the possibility of implementing different functions via one and the same icon can be ascertained, thereby providing the aforesaid advantages.

According to another aspect of the invention, the actuation on the at least one actuator comprises at least one touch. According to another embodiment, the actuation on the at least one actuator comprises at least one 'drag', or drag action, or combined action of touching and moving over the vehicle touchscreen. Very easily and intuitively, the user is able to activate the change of information on the graphic display device of the vehicle, with minimum distraction from driving. Drag, or drag action, is understood to be the gesture of moving one or more fingers over the surface of the touchscreen without lifting them up during said movement gesture.

In addition, the step of enabling the at least one first mode comprises providing an indication in the at least one second graphic display area, such that the second graphic display area presents to the vehicle user information in addition to that existing on the graphic display device, or a request for a certain decision to be taken.

Advantageously, the indication may highlight the at least one information area, such that either the user can see said information area more clearly or his attention is drawn more effectively towards said information area of the graphic display device of the vehicle.

In a preferred embodiment of the invention, the indication comprises modifying the appearance of the content of the at least one information area. In this way, the user sees the indication or message that the vehicle control unit is conveying to him clearly.

According to another aspect of the invention, modifying the appearance of the content of the at least one information area comprises fading the content of the at least one information area. In this way, the user is able clearly to see that there has been a change in the information area, optionally in the sense of disabling a certain option or information item that was previously available.

In a preferred embodiment of the invention, the at least one actuator comprises a symbol, such that a more comprehensible information item or information suggesting a meaning is conveyed to the user.

In another preferred embodiment of the invention, the at least one actuator is arranged in a corner of the at least one information area, such that it does not interfere with the information presented in said information area and at the same time minimizes the risk that the user, by interacting with the information area, might involuntarily act on the at least one actuator.

Thus, the graphic display system comprises at least one first graphic display device, wherein the at least one first graphic display device comprises the at least one first graphic display area, wherein the at least one first graphic display device comprises the at least one second graphic display area. In this way, the first graphic display device simultaneously accommodates said first graphic display area and second graphic display area, showing the information thereof in parallel to the vehicle user, without said areas interfering with or overlaying one another. All the user has to do is to direct his gaze at a single graphic display device in order to see all the information in said first and second graphic display areas.

According to another aspect of the invention, the graphic display system comprises at least one first graphic display device and at least one second graphic display device, wherein the at least one first graphic display device comprises the at least one first graphic display area and wherein the at least one second graphic display device comprises the at least one second graphic display area. In this way, a first graphic display device may be designed preferentially to show a first type of information, and a second graphic display device may be preferentially designed to display a second type of information, resulting in greater clarity and efficiency in the transmission of data.

Advantageously, the at least one first graphic display device comprises a touchscreen, such that the vehicle user is able easily to interact on the graphic display device.

In the same way, the at least one second graphic display device (5) comprises a touchscreen.

The attached drawings show, by way of non-limiting example, a method for configuring a graphic display system constituted in accordance with the invention. Further features and advantages of said method for configuring a graphic display system, which is the subject of the present invention, will become apparent from the description of a preferred but non-exclusive embodiment illustrated by way of non-limiting example in the accompanying drawings, in which:

### BRIEF DESCRIPTION OF THE DRAWINGS

Figure 1.- This is a perspective view of the instrument panel of a vehicle comprising a graphic display device according to the present invention.
Figure 2.- This is a schematic view of the control unit (CU or ECU) and of the graphic display device with connection thereof to the data transmission means of the vehicle according to the present invention.
Figure 3.- This is a view of a graphic display device with various information areas, providing, in an information area, a first information item associated with a first application according to the present invention.
Figure 4.- This is a view of a graphic display device with various information areas, providing, in an information area, a second information item associated with a second application according to the present invention.
Figure 5.- This is a view of a graphic display device providing, in a graphic display area, the second application associated with the at least one icon according to the present invention.

### DESCRIPTION OF A PREFERRED EMBODIMENT

Given said figures, and in accordance with the numbering used, it is possible to observe therein a preferred illustrative embodiment of the invention comprising the parts and elements indicated and described in detail below.

With a view to facilitating the interpretation of the present invention, a certain number of frequent terms are now defined.

Thus, actuator is understood to mean an actuatable or actionable zone or button allowing actuation between the user and the information displayed.

Icon is understood to mean an actuatable symbol or button representing an application and which is the graphic display of a route to a specific context, namely a direct access to an information item.

Thus, application is understood to mean a context within which a series of interlinked information items are displayed. Said information items may, furthermore, be inter-actuatable. An example of an application is 'audio', and represented within this context there is at least a display representing listening to the radio, listening to a playback list, configuring an equalizer, and so on.

Information associated with an application is understood to mean a 'widget', or information area should be understood to mean a subarea of the graphic display device where, in a predefined space, it is possible to display certain information. That is to say, a summarized, reduced version that represents important information representive of an application. For example, in the 'audio' application, information associated with the 'audio' application could be a display of the real-time-tuned broadcaster and an option to mute playback. In the event that the user wishes to carry out further actions relating to this same application, he would need to open the application or the context in full.

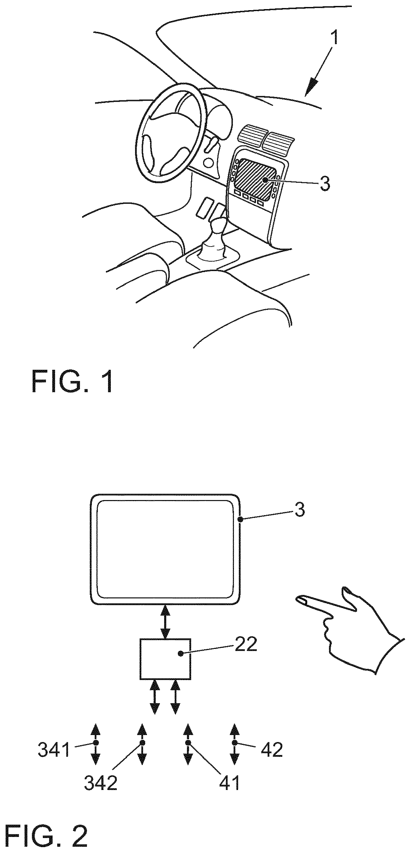

Thus, as may be seen from Figures 1, 2 3 and 4, the present invention consists in a method for configuring a graphic display system, wherein the graphic display system comprises at least one control unit 2, at least one first graphic display area 31, at least one second graphic display area 32, at least one information area 33, wherein the at least one second graphic display area 32 comprises the at least one information area 33, at least one icon 34, wherein the at least one first graphic display area 31 comprises the at least one icon 34, wherein the at least one icon 34 comprises at least one first mode 341 and at least one second mode 342, wherein the at least one information area 33 provides a first information item 331 associated with a first application 41, wherein the at least one icon 34 is associated with a second application 42, wherein the at least one information area 33 comprises at least one actuator 35, in which the at least one control unit 2 carries out the following steps:
I. determining an actuation in the at least one actuator 35,
II. enabling the at least one first mode 341 of the at least one icon 34,
III. determining an actuation in the at least one icon 34, and
IV. providing, in the at least one information area 33, a second information item 332 associated with the second application 42.

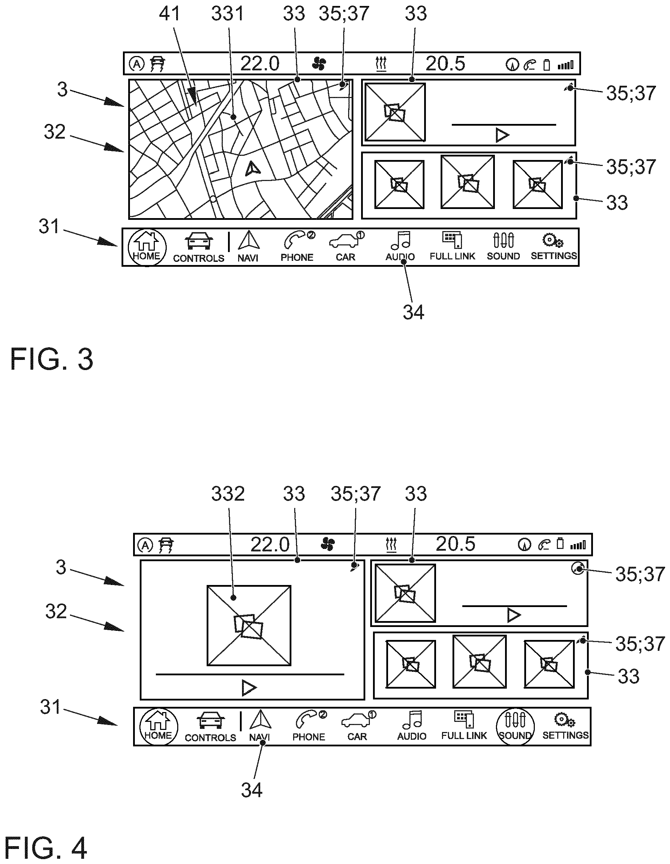

Figure 3 shows a start situation of the method of the present invention, wherein a second graphic display area 32 which comprises three information areas 33 or 'widgets'. The lefthand information area 33 displays, for example, a first information item 331 associated with a first application 41, wherein the first application is, by way of example, navigation. Furthermore, Figure 3 shows a first graphic display area 31 with a plurality of icons 34.

As examples of applications corresponding to the plurality of icons 34, available in order for the information item thereof to appear in the at least one information area 33, in a non-limiting manner the applications for navigation, weather, audio, etc. are shown.

Thus, the steps in the method are explained on the basis of the transition between Figures 3 and 4. In an initial state, as may be seen in Figure 3, the information area 33 provides a first information item 331 in the form of the display of a map. This first information item 331 is associated with a first application 41, in this particular case a navigation application. As shown in Figure 3, a user acts on the actuator 35, placed in a corner of the information area 33. This actuation actuates a first mode 341 of the plurality of icons 34. Furthermore, the user acts on a specific icon 34, the icon 34, by way of example, that refers to the 'audio', thereby actuating the second application 42.

The result of the sequence of actuations displayed is shown in Figure 4, where the information area 33 provides a second information item 332 in the form of a schematic display of the music being played back. This second information item 332 is associated with the second application 42; as mentioned, this second application 42 is the 'audio'.

Therefore, by means of a simple actuation of icons, the information item displayed in the at least one information area 33 is interchanged without covering or concealing information displayed by the graphic display device 3, whilst at the same time the cost in computing terms of said transition is minimized and the amount of information to be refreshed by the graphic display device 3 is reduced.

As may be seen from Figures 3 and 4, it should be mentioned that the at least one icon 34 is always actuatable, i.e. is always accessible and is capable of being actuated at any time.

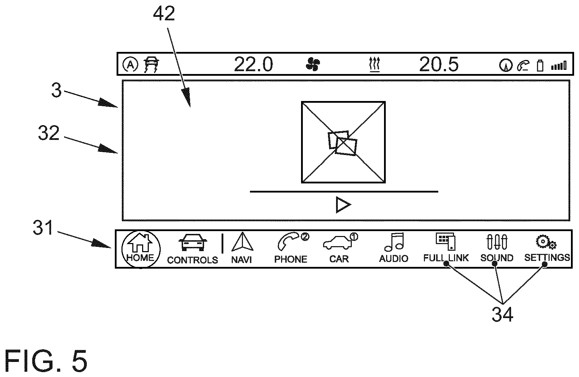

More particularly, as may be seen from Figure 5, the at least one second mode 342 of the at least one icon 34 comprises providing, in the at least one second graphic display area 32, the second application 42 associated with the at least one icon 34. Said second mode 342 is that which is enabled and/or determined in the step of enabling the at least one first mode 341 of the at least one icon 34. This second mode 342 involves the icon 34, when touched or clicked on, giving full-screen access to the second application 42. A differentiation should be made between displaying information associated with an application via an information area 33 and the provision of access to said application. An example of this is that a second mode 342 of an icon 34 relating to "weather" is to provide basic information associated with "weather", for example the outside temperature and real time. In the meantime, in a first mode 341, upon touching or clicking on the same icon 34 access would be provided to the "weather" application within which the user is able to perform any kind of action relating to the display of information associated with said application and/or topic.

More specifically, touching one of the at least one icon 34 without having enabled the at least one first mode 341, owing to the fact that an actuation on the at least one actuator 35 has not been determined, leads to the display, in the at least one second graphic display area 32, of the at least one second application 42 associated with the at least one touched icon 34. Advantageously, in order to return to the view prior to the display of the at least one second application 42 in the at least one second graphic display area 32, a first embodiment comprises at least one 'Home' icon, which, when touched, returns to the previous view in which the at least one information area 33 is included in the at least one second graphic display area 32. An alternative embodiment comprises at least one 'back' icon, which, when touched, returns to the previous view in which at least one information area 33 is included in the at least one second graphic display area 32.

According to another aspect of the invention, as may be seen from Figures 2, 3 and 4, actuation on the at least one actuator 35 comprises at least one touch.

According to yet another aspect of the invention, as may be seen from Figures 2, 3 and 4, actuation on the at least one actuator 35 comprises at least one drag.

Thus, different embodiments are envisaged in terms of types of touch, which may be long, short, hard, with drag or movement, etc. and all these with one finger or with a number of fingers.

According to another aspect of the invention, as may be seen from Figures 3, 4 and 5, the step of enabling the at least one first mode 341 comprises providing an indication 36 in the at least one second graphic display area 32. The indication 36 may comprise actions in the second graphic display area 32, such as size reduction, colour change, shading, etc. Said actions may arise independently or in combination.

More particularly, as may be seen from Figure 4, the indication 36 comprises highlighting the at least one information area 33.

More specifically, as may be seen from Figures 4 and 5, the indication 36 comprises modifying the appearance of the content of the at least one information area 33.

According to a preferred embodiment of the invention, modifying the appearance of the content of the at least one information area 33 comprises fading the content of the at least one information area 33. In a further, alternative embodiment, modifying the appearance of the content of the at least one information area 33 comprises shading the content of the at least one information area 33.

More specifically, as may be seen from Figures 3 and 4, the at least one actuator 35 comprises a symbol 37. Said symbol 37 may comprise, in a non-limiting manner, a display of a pencil and/or pen. The function of said actuator 35 may, in a preferred manner, be that of editing the content of the graphic display device 3 of the HMI. Said actuator or 35 could be displayed as a preferably shaded internal bar.

Furthermore, as may be seen from Figures 3 and 4, the at least one actuator 35 is placed in a corner of the at least one information area 33.

According to a preferred embodiment of the invention, as may be seen from Figures 1 and 3, the graphic display system comprises at least one first graphic display device 3, wherein the at least one first graphic display device 3 comprises the at least one first graphic display area 31, wherein the at least one first graphic display device 3 comprises the at least one second graphic display area 32.

According to an alternative embodiment of the invention, the graphic display system comprises at least one first graphic display device 3 and at least one second graphic display device 5, wherein the at least one first graphic display device 3 comprises the at least one first graphic display area 31 and wherein the at least one second graphic display device 5 comprises the at least one second graphic display area 32.

It should be mentioned, as may be seen from Figures 1 and 2, that the at least one first graphic display device 3 comprises a touchscreen.

Additionally, as may be seen from Figure 2, the at least one second graphic display device 5 comprises a touchscreen.

The details, the forms, the dimensions and other accessory elements, and also the components used in the implementation of the method for configuring a graphic display system may, as appropriate, be replaced by others that are technically equivalent and do not depart from the scope defined by the claims that are included after the following list.

### List of reference numbers:

- 1: vehicle
- 2: control unit
- 3: first graphic display device
- 31: first graphic display area
- 32: second graphic display area
- 33: information area
- 331: first information item
- 332: second information item
- 34: icon
- 341: first mode
- 342: second mode
- 35: actuator
- 36: indication
- 37: symbol
- 41: first application
- 42: second application
- 5: second graphic display device

## Claims

1. Method for configuring a graphic display system, wherein the graphic display system comprises
- at least one control unit (2),
- at least one first graphic display area (31),
- at least one second graphic display area (32),
- at least one information area (33), wherein the at least one second graphic display area (32) comprises the at least one information area (33),
- at least one icon (34), wherein the at least one first graphic display area (31) comprises the at least one icon (34),
wherein the at least one icon (34) comprises at least one first mode (341) and at least one second mode (342),
wherein the at least one information area (33) provides a first information item (331) associated with a first application (41),
wherein the at least one icon (34) is associated with a second application (42), and wherein said at least one icon (34) is always actuatable
wherein the at least one information area (33) comprises at least one actuator (35), in which the at least one control unit (2) carries out the following steps:
I. determining an actuation in the at least one actuator (35),
II. enabling the at least one first mode (341) of the at least one icon (34), when an actuation on the at least one actuator (35) has been determined,
III. determining an actuation in the at least one icon (34), and
IV. providing, in the at least one information area (33), a second information item (332) associated with the second application (42),
or
I. determining an actuation in the at least one icon (34),
II. enabling the at least one second mode (342) of the at least one icon (34), when an actuation on the at least one actuator (35) has not been determined, and
III. providing, in the at least one second graphic display area (32), the second application (42) associated with the at least one icon (34).

2. Method for configuring a graphic display system according to Claim 1, **characterized in that** the actuation on the at least one actuator (35) comprises at least one touch.

3. Method for configuring a graphic display system according to Claim 1, **characterized in that** the actuation on the at least one actuator (35) comprises at least one drag.

4. Method for configuring a graphic display system according to Claim 1, **characterized in that** the step of enabling the at least one first mode (341) comprises providing an indication (36) in the at least one second graphic display area (32).

5. Method for configuring a graphic display system according to Claim 4, **characterized in that** the indication (36) comprises highlighting the at least one information area (33).

6. Method for configuring a graphic display system according to Claim 4, **characterized in that** the indication (36) comprises modifying the appearance of the content of the at least one information area (33).

7. Method for configuring a graphic display system according to Claim 6, **characterized in that** modifying the appearance of the content of the at least one information area (33) comprises fading the content of the at least one information area (33).

8. Method for configuring a graphic display system according to Claim 2, **characterized in that** the at least one actuator (35) comprises a symbol (37).

9. Method for configuring a graphic display system according to Claim 2, **characterized in that** the at least one actuator (35) is placed in a corner of the at least one information area (33).

10. Method for configuring a graphic display system according to Claim 1, **characterized in that** the graphic display system comprises at least one first graphic display device (3), wherein the at least one first graphic display device (3) comprises the at least one first graphic display area (31), wherein the at least one first graphic display device (3) comprises the at least one second graphic display area (32)

11. Method for configuring a graphic display system according to Claim 1, **characterized in that** the graphic display system comprises at least one first graphic display device (3) and at least one second graphic display device (5), wherein the at least one first graphic display device (3) comprises the at least one first graphic display area (31) and wherein the at least one second graphic display device (5) comprises the at least one second graphic display area (32).

12. Method for configuring a graphic display system according to Claim 10, **characterized in that** the at least one first graphic display device (3) comprises a touchscreen.

13. Method for configuring a graphic display system according to Claim 11, **characterized in that** the at least one second graphic display device (5) comprises a touchscreen.

## Patentansprüche

1. Verfahren zum Konfigurieren eines graphischen Anzeigesystems, wobei das graphische Anzeigesystem Folgendes umfasst
- mindestens eine Steuereinheit (2),
- mindestens einen ersten graphischen Anzeigebereich (31),
- mindestens einen zweiten graphischen Anzeigebereich (32),
- mindestens einen Informationsbereich (33), wobei der mindestens eine zweite graphische Anzeigebereich (32) den mindestens einen Informationsbereich (33) umfasst,
- mindestens ein Symbol (34), wobei der mindestens eine erste graphische Anzeigebereich (31) das mindestens eine Symbol (34) umfasst,
wobei das mindestens eine Symbol (34) mindestens einen ersten Modus (341) und mindestens einen zweiten Modus (342) umfasst,
wobei der mindestens eine Informationsbereich (33) ein erstes Informationselement (331) bereitstellt, welches mit einer ersten Anwendung (41) verbunden ist,
wobei das mindestens eine Symbol (34) mit einer zweiten Anwendung (42) verbunden ist, und wobei das mindestens eine Symbol (34) immer betätigt werden kann,
wobei der mindestens eine Informationsbereich (33) mindestens ein Bedienelement (35) umfasst, bei dem die mindestens eine Steuereinheit (2) die folgenden Schritte ausführt:
I. Bestimmen einer Betätigung bei dem mindestens einen Bedienelement (35),
II. Ermöglichen des mindestens einen ersten Modus (341) des mindestens einen Symbols (34), wenn eine Betätigung bei dem
mindestens einen Bedienelement (35) bestimmt wurde,
III. Bestimmen einer Betätigung bei dem mindestens einen Symbol (34), und
IV. Bereitstellen in dem mindestens einen Informationsbereich (33) eines zweiten Informationselements (332), welches mit der zweiten Anwendung (42) verbunden ist,
oder
I. Bestimmen einer Betätigung bei dem mindestens einen Symbol (34),
II. Ermöglichen des mindestens einen zweiten Modus (342) des mindestens einen Symbols (34), wenn eine Betätigung bei dem
mindestens einen Bedienelement (35) nicht bestimmt wurde,
III. Bereitstellen in dem mindestens einen zweiten graphischen Anzeigebereich (32), die zweite Anwendung (42), die mit dem mindestens einen Symbol (34) verbunden ist.

2. Verfahren zum Konfigurieren eines graphischen Anzeigesystems nach Anspruch 1, **dadurch gekennzeichnet, dass** die Betätigung des mindestens einen Bedienelements (35) mindestens eine Berührung umfasst.

3. Verfahren zum Konfigurieren eines graphischen Anzeigesystems nach Anspruch 1, **dadurch gekennzeichnet, dass** die Betätigung des mindestens einen Bedienelements (35) mindestens ein Ziehen umfasst.

4. Verfahren zum Konfigurieren eines graphischen Anzeigesystems nach Anspruch 1, **dadurch gekennzeichnet, dass** der Schritt des Ermöglichens des mindestens einen ersten Modus (341) das Bereitstellen einer Anzeige (36) in dem mindestens einen zweiten graphischen Anzeigebereich (32) umfasst.

5. Verfahren zum Konfigurieren eines graphischen Anzeigesystems nach Anspruch 4, **dadurch gekennzeichnet, dass** die Anzeige (36) das Hervorheben des mindestens einen Informationsbereich (33) umfasst.

6. Verfahren zum Konfigurieren eines graphischen Anzeigesystems nach Anspruch 4, **dadurch gekennzeichnet, dass** die Anzeige (36) das Modifizieren der Darstellung der Inhalte in dem mindestens einen Informationsbereich (33) umfasst.

7. Verfahren zum Konfigurieren eines graphischen Anzeigesystems nach Anspruch 6, **dadurch gekennzeichnet, dass** das Modifizieren der Darstellung der Inhalte in dem mindestens einen Informationsbereich (33) das Überblenden der Inhalte in dem mindestens einen Informationsbereich (33) umfasst.

8. Verfahren zum Konfigurieren eines graphischen Anzeigesystems nach Anspruch 2, **dadurch gekennzeichnet, dass** das mindestens eine Bedienelement (35) ein Symbol (37) umfasst.

9. Verfahren zum Konfigurieren eines graphischen Anzeigesystems nach Anspruch 2, **dadurch gekennzeichnet, dass** das mindestens eine Bedienelement (35) in einer Ecke des mindestens einen Informationsbereichs (33) plaziert ist.

10. Verfahren zum Konfigurieren eines graphischen Anzeigesystems nach Anspruch 1, **dadurch gekennzeichnet, dass** das graphische Anzeigesystem mindestens ein erstes graphisches Anzeigegerät (3) umfasst, wobei das mindestens eine erste graphische Anzeigegerät (3) mindestens einen ersten graphischen Anzeigebereich (31) umfasst, wobei das mindestens eine erste graphische Anzeigegerät (3) mindestens einen zweiten graphischen Anzeigebereich (32) umfasst.

11. Verfahren zum Konfigurieren eines graphischen Anzeigesystems nach Anspruch 1, **dadurch gekennzeichnet, dass** das graphische Anzeigesystem mindestens ein erstes graphisches Anzeigegerät (3) und mindestens ein zweites graphisches Anzeigegerät (5) umfasst, wobei das mindestens eine erste graphische Anzeigegerät (3) mindestens einen ersten graphischen Anzeigebereich (31) umfasst und wobei das mindestens eine zweite graphische Anzeigegerät (5) mindestens einen zweiten graphischen Anzeigebereich (32) umfasst.

12. Verfahren zum Konfigurieren eines graphischen Anzeigesystems nach Anspruch 10, **dadurch gekennzeichnet, dass** das mindestens eine erste graphische Anzeigegerät (3) einen Touchscreen umfasst.

13. Verfahren zum Konfigurieren eines graphischen Anzeigesystems nach Anspruch 11, **dadurch gekennzeichnet, dass** das mindestens eine zweite graphische Anzeigegerät (5) einen Touchscreen umfasst.

## Revendications

1. Procédé pour configurer un système d'affichage graphique, dans lequel le système d'affichage graphique comprend
- au moins une unité de commande (2),
- au moins une première zone d'affichage graphique (31),
- au moins une seconde zone d'affichage graphique (32),
- au moins une zone d'information (33), dans laquelle la au moins une seconde zone d'affichage graphique (32) comprend la au moins une zone d'information (33),
- au moins un pictogramme (34), dans lequel la au moins une première zone d'affichage graphique (31) comprend le au moins un pictogramme (34),
dans lequel le au moins un pictogramme (34) comprend au moins un premier mode (341) et au moins un second mode (342),
dans lequel la au moins une zone d'information (33) fournit un premier élément d'information (331) associé à une première application (41),
dans lequel le au moins un pictogramme (34) est associé à une seconde application (42), et dans lequel ledit au moins un pictogramme (34) est toujours actionnable
dans lequel la au moins une zone d'information (33) comprend au moins un actionneur (35), dans lequel la au moins une unité de commande (2) réalise les étapes suivantes :
I. déterminer un actionnement dans le au moins un actionneur (35),
II. activer le au moins un premier mode (341) du au moins un pictogramme (34), lorsqu'un actionnement sur le au moins un actionneur (35) a été déterminé,
III. déterminer un actionnement dans le au moins un pictogramme (34), et
IV. fournir, dans la au moins une zone d'information (33), un second élément d'information (332) associé à la seconde application (42),
ou
I. déterminer un actionnement dans le au moins un pictogramme (34),
II. activer le au moins un second mode (342) du au moins un pictogramme (34), lorsqu'un actionnement sur le au
moins un actionneur (35) n'a pas été déterminé, et
III. fournir, dans la au moins une seconde zone d'affichage graphique (32), la seconde application (42) associée avec le au moins un pictogramme (34).

2. Procédé pour configurer un système d'affichage graphique selon la revendication 1, **caractérisé en ce que** l'actionnement sur le au moins un actionneur (35) comprend au moins un effleurement.

3. Procédé pour configurer un système d'affichage graphique selon la revendication 1, **caractérisé en ce que** l'actionnement sur le au moins un actionneur (35) comprend au moins un glissement.

4. Procédé pour configurer un système d'affichage graphique selon la revendication 1, **caractérisé en ce que** l'étape d'activation du au moins un premier mode (341) comprend la fourniture d'une indication (36) dans la au moins une seconde zone d'affichage graphique (32).

5. Procédé pour configurer un système d'affichage graphique selon la revendication 4, **caractérisé en ce que** l'indication (36) comprend le marquage de la au moins une zone d'information (33).

6. Procédé pour configurer un système d'affichage graphique selon la revendication 4, **caractérisé en ce que** l'indication (36) comprend la modification de l'apparence du contenu de la au moins une zone d'information (33).

7. Procédé pour configurer un système d'affichage graphique selon la revendication 6, **caractérisé en ce que** la modification de l'apparence du contenu de la au moins une zone d'information (33) comprend l'effacement du contenu de la au moins une zone d'information (33).

8. Procédé pour configurer un système d'affichage graphique selon la revendication 2, **caractérisé en ce que** le au moins un actionneur (35) comprend un symbole (37).

9. Procédé pour configurer un système d'affichage graphique selon la revendication 2, **caractérisé en ce que** le au moins un actionneur (35) est placé dans un coin de la au moins une zone d'information (33).

10. Procédé pour configurer un système d'affichage graphique selon la revendication 1, **caractérisé en ce que** le système d'affichage graphique comprend au moins un premier dispositif d'affichage graphique (3), dans lequel le au moins un premier dispositif d'affichage graphique (3) comprend la au moins une première zone d'affichage graphique (31), dans lequel le au moins un premier dispositif d'affichage graphique (3) comprend la au moins une seconde zone d'affichage graphique (32).

11. Procédé pour configurer un système d'affichage graphique selon la revendication 1, **caractérisé en ce que** le système d'affichage graphique comprend au moins un premier dispositif d'affichage graphique (3) et au moins un second dispositif d'affichage graphique (5), dans lequel le au moins un premier dispositif d'affichage graphique (3) comprend la au moins une première zone d'affichage graphique (31) et dans lequel le au moins un second dispositif d'affichage graphique (5) comprend la au moins une seconde zone d'affichage graphique (32).

12. Procédé pour configurer un système d'affichage graphique selon la revendication 10, **caractérisé en ce que** le au moins un premier dispositif d'affichage graphique (3) comprend un écran tactile.

13. Procédé pour configurer un système d'affichage graphique selon la revendication 11, **caractérisé en ce que** le au moins un second dispositif d'affichage graphique (5) comprend un écran tactile.
